# EUROPÄISCHE PATENTSCHRIFT

(11) **EP 2 325 114 B1**
(45) Veröffentlichungstag und Bekanntmachung des Hinweises auf die Patenterteilung: **30.05.2012**
(21) Anmeldenummer: 10187359.4
(22) Anmeldetag: 13.10.2010
(51) Int. Cl.: B65G 17/42, B65G 17/44

(54) **Zahnriemen zum Transport von Objekten**
Toothed belt for transporting objects
Courroie dentée pour le transport d'objets

(30) Priorität: 26.10.2009 DE 102009050716
(43) Veröffentlichungstag der Anmeldung: 25.05.2011
(73) Patentinhaber: Arntz Beteiligungs GmbH & Co. KG, 37671 Höxter (DE)
(72) Erfinder: Dr. Ballhausen, Ulrich, 33014, Bad Driburg (DE); Diedrichs, Daniel, 32545, Bad Oeynhausen (DE); Becker, Ralf, 37691, Boffzen (DE)
(74) Vertreter: Ostermann, Thomas

(56) Entgegenhaltungen:
- EP-A1- 1 092 657
- EP-A1- 1 561 711
- GB-A- 1 176 268
- US-A- 4 697 693

## Beschreibung

Die Erfindung betrifft einen Zahnriemen zum Transportieren von Objekten nach dem Oberbegriff des Patentanspruchs 1.

Werkstücke und andere Objekte werden in Produktionslinien häufig mit Hilfe von Zahnriemen transportiert. Um eine exakte Positionierung der Objekte auf dem Zahnriemen zu erreichen und ein Verrutschen derselben während des Transports zu verhindern, werden an dem Zahnriemen Transporthalterungen angeordnet, so dass das Objekt zum einen am Riemenkörper des Zahnriemens und zum anderen an einer Stützfläche der Transporthalterung abgestützt ist. Die Verwendung von Zahnriemen als synchrone Antriebsriemen bietet hierbei den Vorteil einer exakten Bewegungssteuerung und insbesondere in Verbindung mit der Transporthalterung einer genauen Positionierung der Objekte in Bezug auf eine Bearbeitungsstation, der die Objekte zugeführt werden.

Zur Befestigung der Transporthalterung an dem Zahnriemen ist beispielsweise aus der DE 199 09 617 A1 bekannt, dass in einer Ausnehmung im Bereich des Zahns eine Mutter angeordnet ist und die Transporthalterung mit Hilfe einer Schraube, die durch den Riemenkörper geführt wird und in die Mutter eingreift, an dem Zahnriemen befestigt ist. Nachteilig hierbei ist, dass die Mutter aufgrund einer vergleichsweise geringen Gewindelänge und einer fehlenden mantelseitigen Abstützung in dem Zahnriemen eine exakte Positionierung der Transporthalterung in Bezug auf den Zahnriemen erschwert.

Ferner ist aus der EP 1 092 657 B1 bekannt, statt einer Mutter ein Festlegeelement vorzusehen, welches in einer der Außengeometrie des Festlegeelements angepassten Ausnehmung eingesetzt wird, die sich im Zahn und dem Riemenkörper des Zahnriemens erstreckt. Das Festlegeelement weist einen langgestreckten Körper auf, der sich vom Kopf des Zahnriemens bis in den Riemenkörper erstreckt und von dem im Bereich des Kopfes seitlich mindestens ein Flügel abragt. Nachteilig hierbei ist, dass zur drehfesten Verbindung des Festlegeelements mit dem Zahnriemen zwei Festlegeelemente anzuordnen und mit einer Transporthalterung zu verbinden sind.

Aus der US 4 697 693 A ist ein gattungsgemäβer Zahnriemen zum Transportieren von Objekten mit einem Riemenkörper und mit einer Anzahl von in Transportrichtung beabstandet zueinander angeordneten und sich quer zur Transportrichtung erstreckenden Zähnen bekannt. In mindestens einem Zahn ist hierbei eine Ausnehmung ausgeformt, die sich vom Zahnkopf durch den Zahn und den Riemenkörper bis zu einer dem Zahnkopf gegenüberliegenden Außenseite des Riemenkörpers erstreckt. Weiter ist ein Festlegeelement zur Festlegung einer Transporthalterung für Objekte auf der Außenseite des Riemenkörpers vorgesehen. Das Festlegeelement weist zwei beabstandet zueinander angeordnete Befestigungsabschnitte auf, welche langgestreckt ausgebildet sind und sich durch den Zahn hindurch bis in den Riemenkörper erstrecken und zur Festlegung der Transporthalterung mit dem Festlegeelement von der Außenseite des Riemenkörpers zugängig sind. Die Befestigungsabschnitte des Festlegeelements sind durch einen Verbindungsabschnitt verbunden. Der Verbindungsabschnitt erstreckt sich außerhalb des Zahns quer zur Transportrichtung. Er liegt hierbei mit einer Flachseite desselben von außen an der Kopffläche des Zahns an. Nachteilig ist, dass zur Sicherung der Laufeigenschaften des Zahnriemens unterschiedliche Zähne vorgesehen werden müssen. Es existieren zum einen normale Zähne ohne Ausnehmung, die nicht zur Befestigung der Festlegeelemente ausgebildet sind. Darüber hinaus existieren modifizierte Zähne, welche eine geringere Zahnhöhe sowie die Ausnehmung aufweisen, und die zur Befestigung der Festlegeelemente geeignet sind.

Aufgabe der vorliegenden Erfindung ist es daher, einen Zahnriemen derart weiterzubilden, dass eine lagefeste Verbindung der Transporthalterung mit dem Zahnriemen in besonders einfacher weise möglich ist.

Zur Lösung der Aufgabe weist die Erfindung die Merkmale des Patentanspruchs 1 auf.

Der besondere Vorteil der Erfindung besteht darin, dass lediglich ein Festlegeelement in lediglich eine Ausnehmung eingesetzt werden muss. Da das Festlegeelement zwei beabstandet zueinander angeordnete Befestigungsabschnitte aufweist, kann die Transporthalterung mit nur einem Festlegeelement drehfest in Bezug auf den Zahnriemen angeordnet werden. Insofern vereinfacht sich die Herstellung des Zahnriemens, da auf das Einsetzen eines zweiten Festlegeelements und auf das Vorstehen einer zweiten Ausnehmung verzichtet werden kann.

Nach einer bevorzugten Ausführungsform der Erfindung ist der Verbindungsabschnitt stegförmig ausgebildet und erstreckt sich quer zur Transportrichtung.

Vorteilhaft erhöht sich durch die Stegform und die Orientierung des Verbindungsabschnitts quer zur Transportrichtung die Verbindungssteifigkeit des Zahnriemens, so dass auch bei einer dynamischen Belastung die Schwingungsneigung des Zahnriemens reduziert wird. Ferner weisen die Befestigungsabschnitte einen festen Abstand zueinander auf. Aufgrund des festen Abstands der Befestigungsabschnitte zueinander ist die Montage der Transporthalterung besonders einfach.

Nach einer Weiterbildung der Erfindung ist eine Grundfläche der Ausnehmung im Bereich des Verbindungsabschnitts als eine Anlegefläche ausgebildet. Eine der Grundfläche zugewandte Seite des Verbindungsabschnitts lässt sich derart an die Grundfläche der Ausnehmung anlegen, dass eine der Außenseite zugewandte Stirnfläche der Befestigungsabschnitte eine vordefinierte Lage in Bezug auf die Außenseite einnimmt. Vorteilhaft ist hierdurch die Lage des Festlegeelements in der Ausnehmung und die Lage des Festlegeelements in Bezug auf die Transporthalterung definiert. Das Einsetzen des Festlegeelements in die Ausnehmung und die Befestigung der Transporthalterung können in besonders einfacher Weise, beispielsweise automatisiert erfolgen.

Nach einer Weiterbildung der Erfindung ist eine Breite des Verbindungsabschnitts in Transportrichtung geringer als eine Breite der Kopffläche des Zahns. Die Ausnehmung zur Aufnahme des Festlegeelements kann auf der der Außenseite des Riemenkörpers gegenüberliegenden Seite des Zahnriemens ausschließlich im Bereich der Kopffläche vorgesehen sein. Vorteilhaft kann hierdurch die Geometrie der Zahnflanken vollständig erhalten bleiben, so dass die Laufeigenschaften des Zahnriemens und der exakte Bewegungsablauf desselben erhalten bleiben.

Nach einer Weiterbildung der Erfindung ist eine Dicke des Verbindungsabschnitts geringer als eine Höhe des Zahns. Vorteilhaft kann hierdurch ein Eindringen des Verbindungsabschnitts in den Riemenkörper vermieden werden. Der Riemenkörper bleibt demzufolge zum einen als Stützfläche für die zu transportierenden Objekte vollständig erhalten. Zum anderen wird hierdurch vermieden, dass im Bereich des Riemenkörpers verlaufende Lastkorden, die insbesondere die Zugfestigkeit und Widerstandsfähigkeit des Zahnriemens erhöhen, beschädigt werden oder im Bereich des Verbindungsabschnitts auszusparen sind.

Nach einer Weiterbildung der Erfindung schließt eine der Kopffläche des Zahns zugewandte Seite des Festlegeelements flächig mit der Kopffläche des Zahns ab bzw. ist gegenüber der Kopffläche des Zahns in Richtung der Außenseite des Riemenkörpers zurückversetzt angeordnet. Vorteilhaft wird hierdurch die Laufruhe des Zahnriemens verbessert und sichergestellt, dass es insbesondere im Bereich der mit den Zähnen des Zahnriemens kämmenden Zahnräder zu einer konfliktfreien Umlenkung des Zahnriemens kommt.

Nach einer Weiterbildung der Erfindung ist das Festlegeelement aus einem mechanischen Werkstoff gefertigt und/oder einstückig ausgebildet. Vorteilhaft kann das Festlegeelement weist beispielsweise mittels Druckgießens in großer Stückzahl kostengünstig hergestellt werden. Das Festlegeelement weist eine hohe Festigkeit und insbesondere eine hohe Verwindungssteifigkeit auch in Richtung des Verbindungsabschnitts auf.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:

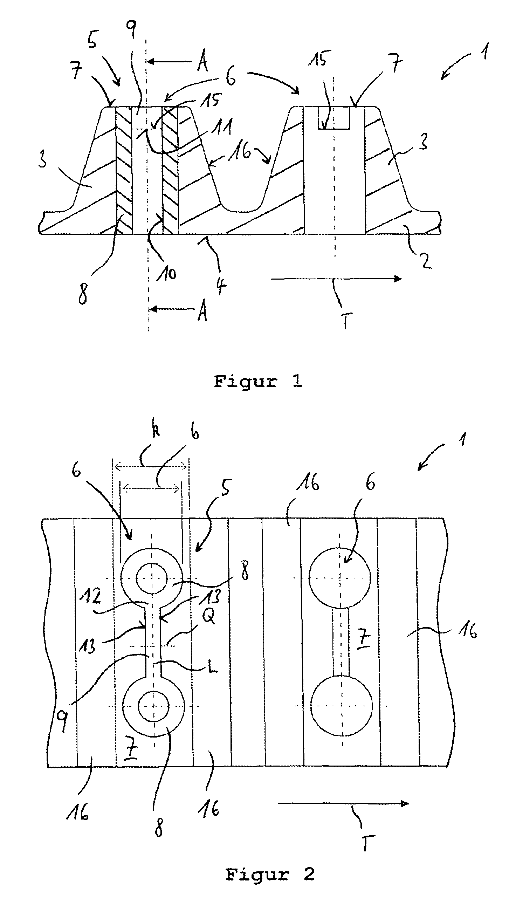

- Figur 1: eine Seitenschnittdarstellung eines erfindungs- gemäßen Zahnriemens,
- Figur 2: eine Draufsicht auf den Zahnriemen gemäß Figur 1 und

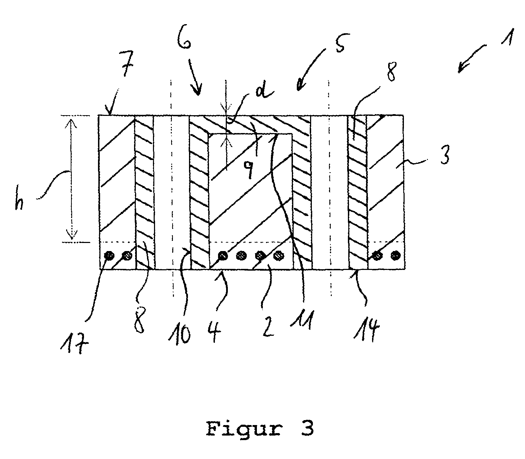

- Figur 3: eine Schnittdarstellung des Zahnriemens gemäß Figur 1 nach dem Schnitt A-A.

Ein Zahnriemen 1 weist einen Riemenkörper 2 und eine Anzahl von an dem Riemenkörper 2 angeformten Zähnen 3 auf. Der Zahnriemen 1 ist in eine Transportrichtung T langgestreckt ausgebildet als ein Endlosrahmen, dessen Zähne 3 mit nicht dargestellten Zahnrädern zum Eingriff kommen zur Umlenkung des Zahnriemens 1.

Der Zahnriemen 1 wird beispielsweise in Produktionslinien zum Transport von Werkstücken oder anderen Objekten von einer Bearbeitungsstation zur nächsten eingesetzt. Das Objekt wird auf einer den Zähnen 3 abgewandten Außenseite 4 des Riemenkörpers 2 aufgesetzt und stützt sich zusätzlich an einer nicht dargestellten Transporthalterung ab, die an der Außenseite 4 des Zahnriemens 1 anliegt und über Festlegeelemente 5 gehalten wird.

Die Festlegeelemente 5 sind in einer Ausnehmung 6 des Zahnriemens 1 angeordnet. Die Ausnehmung 6 erstreckt sich von einer Kopffläche 7 des Zahns 3 durch den Zahn 3 und den Riemenkörper 2 zu der Außenseite 4 des Zahnriemens 1.

Das Festlegeelement 5 ist durch zwei Befestigungsabschnitte 8 und einen die Befestigungsabschnitte 8 verbindenden Verbindungsabschnit 9 gebildet. Es ist symmetrisch aufgebaut bezüglich einer sich in Richtung des Verbindungsabschnitts 9 erstreckenden Längsmittelachse L und einer sich in Transportrichtung T erstreckenden Quermittelachse Q. Die beiden Befestigungsabschnitte 8 schließen sich in Erstreckungsrichtung des Verbindungsabschnitts 9 jeweils randseitig an denselben an, wobei jeweils ein Befestigungsabschnitt 8 an einem Ende des Verbindungsabschnitts 9 angeordnet ist. Der Verbindungsabschnitt 9 ist stegförmig ausgebildet und weist einen im Wesentlichen quaderförmigen Querschnitt auf. Die Befestigungsabschnitte 8 sind hülsenförmig ausgebildet. Sie weisen eine zylinderförmige Außengeometrie auf. An einer Innenseite 10 der Hülse 8 ist zumindest abschnittsweise ein Gewinde angeordnet, in das zur Befestigung der nicht dargestellten Transporthalterung eine Schraube bzw. eine Gewindestange eingedreht werden kann. Der Verbindungsabschnitt 9 ist auf einer der Kopffläche 7 zugewandten Seite 12 des Festlegeelements 5 einstückig mit den Befestigungsabschnitten 8 verbunden.

Das Festlegeelement 5 ist als ein Metallteil ausgebildet, das beispielsweise mittels Druckgießens als ein Zinkdruckgussteil, als ein Aluminiumdruckgussteil oder als ein Magnesiumdruckgussteil ausgeführt sein kann.

Die Ausnehmung 6 ist derart auf die Geometrie des Festlegeelements 5 abgestimmt, dass das in der Ausnehmung 6 angeordnete Festlegeelement 5 unter Anlage der Mantelflächen der Befestigungsabschnitte 8, einer der Außenseite 4 zugewandten Seite 11 des Verbindungsabschnitts 9 und zwei die Seite 11 mit der der Kopffläche 7 des Zahns 3 zugewandten Seite 12 verbindenden Längsseiten 13 an den Wandungen der Ausnehmung 6 anliegt und reibschlüssig in der Ausnehmung 6 gehalten wird. Der Verbindungsabschnitt 9 des Festlegeelements 5 ist derart geformt, dass er sich ausschließlich im Bereich des Zahns 3 und quer zur Transportrichtung T erstreckt. Die Befestigungsabschnitte 8 sind derart langgestreckt ausgebildet, dass sie sich von der Kopffläche 7 durch den Zahn 3 und den Riemenkörper 2 bis zur Außenseite 4 des Zahnriemens 1 erstrecken. Eine der Außenseite 4 zugewandte Stirnseite 14 der Befestigungsabschnitte 8 schließt bündig mit der Außenseite 4 des Riemenkörpers 2 ab. Eine derart exakte Positionierung des Festlegeelements 5 in Bezug auf die Außenseite 4 wird bewirkt, indem eine Grundfläche 15 der Ausnehmung 6 im Bereich des Verbindungsabschnitts 9 als eine Anlagefläche ausgebildet ist. Durch das Anlegen der der Grundfläche 15 zugewandten Seite 11 des Verbindungsabschnitts 9 an die Grundfläche 15 der Ausnehmung 6 nimmt die Stirnseite 14 der Befestigungsabschnitte 8 die vordefinierte Lage in Bezug auf die Außenseite 4 ein.

Eine Breite b der Befestigungsabschnitte 8 in Transportrichtung T ist geringer als eine Breite k der Kopffläche 7 des Zahns 3. Ferner ist eine Dicke d des Verbindungsabschnitts 9 geringer als eine Höhe h des Zahns 3. Die der Kopffläche 7 des Zahns 3 zugewandte Seite 12 des Festlegeelements 5 ist eben ausgebildet und schließt flächig mit der Kopffläche 7 des Zahns 3 ab. Auf diese Weise wird bewirkt, dass die Zahnflanken 16 trotz des Vorsehens des Festlegeelements 5 vollständig erhalten bleiben und der Zahnriemen 1 ungehindert mit den nicht dargestellten Zahnrädern kämmen kann. Ferner erstreckt sich der Verbindungsabschnitt 9 des Festlegeelements 5 ausschließlich im Bereich des Zahns 3, so dass im Bereich des Riemenkörpers 2 angeordnete und in Transportrichtung T erstreckte Lastkorden 17 im Bereich des Verbindungsabschnitts 9 ungehindert angeordnet werden können. Die Lastkorden 17 sind allein im Bereich des Befestigungsabschnitts 8 ausgespart.

Zur Herstellung des Zahnriemens 1 können zunächst Riemenkörper 2 und Zähne 3 in konventioneller Weise gefertigt werden. Die Ausnehmung 6 kann während der Fertigung des Zahnriemens 1 oder nachträglich in denselben eingebracht werden. Unwesentlich ist hierbei, ob jeder Zahn 3 oder nur einzelne Zähne 3 eine Ausnehmung 6 aufweisen. In einzelne oder alle Ausnehmungen 6 werden anschließend die Festlegeelemente 5 eingesetzt. Aufgrund der Symmetrie des Festlegeelements 5 in Bezug auf die Längsmittelachse L ist die Montage besonders einfach. Anschließend wird die nicht dargestellte Transporthalterung auf der Außenseite 4 des Zahnriemens 1 angelegt und in die von der Außenseite 4 zugänglichen Befestigungsabschnitte 8 des Festlegeelements 5 verschraubt.

Das Festlegeelement 5 kann aus einem anderen als einem metallischen Werkstoff hergestellt sein, beispielsweise kann das Festlegeelement 5 als ein Kunststoffspritzgießteil hergestellt sein. Ebenso ist es möglich, dass das Festlegeelement 5 nicht durch Urformen, sondern beispielsweise in einem spanenden Fertigungsverfahren hergestellt wird. Das Festlegeelement 5 muss nicht einstückig ausgebildet sein. Beispielsweise ist es möglich, den Verbindungsabschnitt 9 und die Befestigungsabschnitte 8 separat herzustellen und zu fügen. Als Werkstoffe kommen ferner Verbundwerkstoffe, beispielsweise glasfaserverstärkte Polyamide in Frage. Entscheidend für die Werkstoffauswahl ist zum einen die Festigkeit und in vielen Einsatzfällen auch die Temperaturbeständigkeit.

Die Transporthalterung muss nicht mit dem Festlegeelement 5 verschraubt werden. Es ist möglich, die Transporthalterung und/oder das Festlegeelement 5 mit einem Widerhaken zu versehen bzw. am Festlegeelement 5 und/oder an der Transporthalterung ineinandergreifende Rastelemente anzuordnen.

Statt eines zwei Befestigungsabschnitte 8 verbindenden Verbindungsabschnitts 9 können erfindungsgemäß mehr als zwei Befestigungsabschnitte 8 vorgesehen sein, die über mehr als einen Verbindungsabschnitt 9 miteinander verbunden sind.

Der Verbindungsabschnitt 9 muss sich nicht quer zur Transportrichtung T erstrecken. Die Stirnflächen 14 der Befestigungsabschnitte 8 können gegenüber der Außenseite 4 des Riemenkörpers 2 zurückversetzt angeordnet sein oder über die Außenfläche 4 hinausragen.

## Patentansprüche

1. Zahnriemen zum Transportieren von Objekten mit einem Riemenkörper (2), mit einer Anzahl von in Transportrichtung (T) beabstandet zueinander angeordneten und sich quer zur Transportrichtung (T) erstreckenden Zähnen (3), wobei mindestens ein Zahn (3) eine Ausnehmung (6)aufweist, die sich wenigstens abschnittsweise von einer Kopffläche (7) des Zahns (3) durch den Zahn (3) und den Riemenkörper (2) bis zu einer der Kopffläche (7) gegenüberliegenden Außenseite (4) des Riemenkörpers (2) erstreckt, und mit einem Festlegeelement (5) zur Festlegung einer Transporthalterung für die Objekte auf der Außenseite (4) des Riemenkörpers (2), wobei das Festlegeelement (5) mindestens zwei beabstandet zueinander angeordnete Befestigungsabschnitte (8) aufweist, von denen wenigstens einer langgestreckt ausgebildet ist und sich durch den Zahn (3) hindurch bis mindestens in den Riemenkörper (2)erstreckt und der zur Verbindung der Transporthalterung mit dem Festlegeelement (5) von der Außenseite (4) des Riemenkörpers (2) zugänglich ist, und wobei das Festlegeelement (5) einen die Befestigungsabschnitte (8) verbindenden Verbindungsabschnitt (9) aufweist, **dadurch gekennzeichnet, dass** das Festlegeelement (5) in der Ausnehmung (6) angeordnet ist.

2. Zahnriemen nach Anspruch 1, **dadurch gekennzeichnet, dass** der Verbindungsabschnitt (9) stegförmig ausgebildet und sich quer zur Transportrichtung (T) erstreckt.

3. Zahnriemen nach Anspruch 1 oder 2, **dadurch gekennzeichnet, dass** eine Grundfläche (15) der Ausnehmung (6) im Bereich des Verbindungsabschnitts (9) als eine Anlegefläche ausgebildet ist derart, dass bei Anlegen einer der Grundfläche (15) zugewandten Seite (11) des Verbindungsabschnitts (9) an die Grundfläche (15) der Ausnehmung (6) eine der Außenseite (4) zugewandte Stirnseite (14) der Befestigungsabschnitte (8) eine vordefinierte Lage in Bezug auf die Außenseite (4) einnimmt.

4. Zahnriemen nach einem der Ansprüche 1 bis 3, **dadurch gekennzeichnet, dass** eine Breite (b) des Verbindungsabschnitts (9) in Transportrichtung (T) geringer ist als eine Breite (k) der Kopffläche (7) des Zahns (3).

5. Zahnriemen nach einem der Ansprüche 1 bis 4, **dadurch gekennzeichnet, dass** eine Dicke (d) des Verbindungsabschnitts (9) geringer ist als eine Höhe (h) des Zahns (3).

6. Zahnriemen nach einem der Ansprüche 1 bis 5 **dadurch gekennzeichnet, dass** eine der Kopffläche (7) des Zahns (3) zugewandte Seite (12) des Festlegeelements (5) flächig mit der Kopffläche (7) des Zahns (3) abschließt und/oder gegenüber der Kopffläche (7) des Zahns (3) in Richtung der Außenseite (4) zurückversetzt angeordnet ist.

7. Zahnriemen nach einem der Ansprüche 1 bis 6, **dadurch gekennzeichnet, dass** der Befestigungsabschnitt (8) als eine Hülse ausgebildet ist, wobei auf einer Innenseite (10) der Hülse (8) zumindest abschnittsweise ein Gewinde angeordnet ist.

8. Zahnriemen nach einem der Ansprüche 1 bis 7, **dadurch gekennzeichnet, dass** die Ausnehmung (6) derart auf die Geometrie des Festlegeelements (5) abgestimmt ist, dass das Festlegeelement (5) reibschlüssig in der Ausnehmung (6) gehalten ist.

9. Zahnriemen nach einem der Ansprüche 1 bis 8, **dadurch gekennzeichnet, dass** der Riemenkörper (2) sich in Transportrichtung (T) erstreckende Lastkorden (17) aufweist, wobei die Lastkorden (17) im Bereich des Befestigungsabschnitts (8) ausgespart sind.

10. Zahnriemen nach einem der Ansprüche 1 bis 9, **dadurch gekennzeichnet, dass** das Festlegeelement (5) aus einem metallischen Werkstoff gefertigt ist und/oder einstückig ausgebildet ist.

## Claims

1. Toothed belt for transporting objects comprising a belt body (2) having a plurality of teeth (3) which are arranged in a spaced relation in a transport direction (T) and which extend cross to said direction (T) wherein at least one tooth (3) has a recess (6) that in some areas at least extends from a crest (7) of the tooth (3) through said tooth (3) and said belt body (2) all the way down to an outer surface (4) of the tooth (3) that is opposite to said crest, and a fixing element (5) for fixing a transport holding means for said objects which is disposed on said outer surface (4) of the belt body (2) which fixing element (5) comprises at least two spaced-apart fixing members (8) of which at least one is of elongate shape and extends through the tooth (3) into the belt body (2) and to which access is afforded from said outer surface (4) of the belt body (2) for the purpose of connecting the transport holding means to said fixing element (5) and which fixing element (5) comprises a connecting member (9) adapted to join said fixing members (8), **characterized in that** the fixing element (5) is disposed in the area of said recess (6).

2. Toothed belt according to Claim 1, **characterized in that** the connecting member (9) is in the form of a web extending cross to the transport direction (T).

3. Toothed belt according to Claim 1 or 2, **characterized in that** a base area (15) of the recess (6) is a seat face in the region of the connecting member (9) such that a face end (14) of the fixing members (8) is forced into a defined position relative to said outer surface (4) when a side (11) of the connecting member (9) that is facing said base area (15) gets in contact with said base area (15) of the recess (6).

4. Toothed belt according to any of the preceding Claims 1 to 3, **characterized in that** a width (b) of said connecting member (9) in the transport direction (T) is smaller than a width (k) of the crest (7) of the tooth (3).

5. Toothed belt according to any of the preceding Claims 1 to 4, **characterized in that** a thickness (d) of said connecting member (9) is smaller than a height (h) of the tooth (3).

6. Toothed belt according to any of the preceding Claims 1 to 5, **characterized in that** a side (12) of the fixing element (5) that is facing the crest (7) of the tooth (3) is either flush with said crest (7) of the tooth (3) or set back from said crest (7) relative to the outer surface (4) thereof.

7. Toothed belt according to any of the preceding Claims 1 to 6, **characterized in that** the fixing member (8) is a sleeve on the inner face (10) of which there is a thread provided in some areas at least.

8. Toothed belt according to any of the preceding Claims 1 to 7, **characterized in that** the recess (6) is adapted to the geometry of the fixing element (5) in such a way that said fixing element (5) is retained in the recess (6) by frictional contact.

9. Toothed belt according to any of the preceding Claims 1 to 8, **characterized in that** the belt body (2) includes load cords (17) which extend in the transport direction (T) and which cord runs are interrupted in the areas of the fixing members (8).

10. Toothed belt according to any of the preceding Claims 1 to 9, **characterized in that** the fixing element (5) is made of a metallic material and/or an integral part.

## Revendications

1. Courroie dentée pour le transport d'objets, avec un corps de courroie (2), doté d'une pluralité de dents (3), qui sont disposées à distance les unes des autres, dans la direction de transport (T), et s'étendent transversalement par rapport à ladite direction de transport (T), sachant qu'au moins une dent (3) présente un évidement (6), qui, traversant ladite dent (3) et le corps de courroie (2), s'étende au moins par sections, d'une face de tête (7) de la dent (3) jusqu'à une face extérieure (4) du corps de courroie (2), située à l'opposé de la face de tête (7), est avec un élément de fixation (5) pour la fixation d'un dispositif de maintien des objets sur la face extérieure (4) du corps de courroie (2), sachant que l'élément de fixation (5) est doté d'au moins deux sections de fixation (8), disposées à distance l'une de l'autre, dont l'une au moins est de conception allongée et s'étend, à travers la dent (3), au moins jusque dans le corps de courroie (2) et est accessible de la face extérieure (4) du corps de courroie (2), pour la liaison du dispositif de maintien de transport à l'élément de fixation (5), et sachant que l'élément de fixation (5) présente une section de liaison (9) qui relie les sections de fixation (8), **caractérisée en ce que** l'élément de fixation (5) est disposé dans l'évidement (6).

2. Courroie dentée selon la revendication 1, **caractérisée en ce que** la section de liaison (9) est réalisée en forme de patte et s'étend transversalement par rapport à la direction de transport (T).

3. Courroie dentée selon revendication 1 ou 2, **caractérisée en ce qu'**une surface de base (15) de l'évidement (6) est réalisée, dans la zone de la section de liaison (9), en tant que surface d'appui, de sorte que, lors de l'application d'une face (11) de la section de liaison (9), orientée vers la surface de base (15), contre ladite surface de base (15) de l'évidement (6), une face frontale (14) des sections de fixation (8), orientée vers la face extérieure (4), prend une position prédéterminée, par rapport à la face extérieure (4).

4. Courroie dentée selon l'une des revendications 1 à 3, **caractérisée en ce qu'**une largeur (b) de la section de liaison (9), dans la direction de transport (T), est plus petite qu'une largeur (k) de la face de tête (7) de la dent (3).

5. Courroie dentée selon l'une des revendications 1 à 4, **caractérisée en ce qu'**une épaisseur (d) de la section de liaison (9) est plus petite qu'une hauteur (h) de la dent (3).

6. Courroie dentée selon l'une des revendications 1 à 5, **caractérisée en ce qu'**une face (12) de l'élément de fixation (5), orientée vers la face de tête (7) de la dent (3), se termine à ras de la face de tête (7) de la dent (3) et / ou est en retrait par rapport à ladite face de tête (7) de la dent (3), dans la direction de la face extérieure (4).

7. Courroie dentée selon l'une des revendications 1 à 6, **caractérisée en ce que** la section de fixation (8) est réalisée en forme de douille, sachant que, sur une face intérieure (10) de ladite douille (8), un filetage est aménagé, au moins par sections.

8. Courroie dentée selon l'une des revendications 1 à 7, **caractérisée en ce que** l'évidement (6) est adapté à la géométrie de l'élément de fixation (5) de sorte que ledit élément de fixation (5) soit maintenu par friction dans l'évidement (6).

9. Courroie dentée selon l'une des revendications 1 à 8, **caractérisée en ce que** le corps de courroie (2) présente des cordes de renfort (17), qui s'étendent dans la direction de transport (T), sachant que lesdites cordes de renfort (17) sont absentes dans la région de la section de fixation (8).

10. Courroie dentée selon l'une des revendications 1 à 9, **caractérisée en ce que** l'élément de fixation (5) est fabriqué en matériau métallique et / ou est réalisé d'une pièce.
